# EUROPEAN PATENT SPECIFICATION

(11) **EP 3 039 598 B1**
(45) Date of publication and mention of the grant of the patent: **29.09.2021**
(21) Application number: 14841116.8
(22) Date of filing: 26.08.2014
(51) Int. Cl.: G06F 16/957

(54) **WEB BROWSER FINGERPRINTING**
WEBBROWSER-FINGERABDRUCK
DÉTERMINATION D'EMPREINTE DE NAVIGATEUR INTERNET

(30) Priority: 28.08.2013 US 201314012514
(43) Date of publication of application: 06.07.2016
(73) Proprietor: F5 Networks, Inc, Seattle, WA 98104-1663 (US)
(72) Inventor: CHEN, Jonathan, Santa Clara, CA 95051 (US)
(74) Representative: K2 IP Limited
(86) International application number: PCT/US2014/052776
(87) International publication number: WO 2015/031403

(56) References cited:
- JP-A- 2012 133 567
- KR-B1- 100 390 372
- KR-B1- 100 899 742
- KR-B1- 101 012 245
- US-A1- 2012 047 199
- US-A1- 2013 145 020
- NICK NIKIFORAKIS ET AL: "Cookieless Monster: Exploring the Ecosystem of Web-Based Device Fingerprinting", 2013 IEEE SYMPOSIUM ON SECURITY AND PRIVACY, 19 May 2013 (2013-05-19), pages 541-555, XP032431346, DOI: 10.1109/SP.2013.43 ISBN: 978-1-4673-6166-8

## Description

### TECHNICAL FIELD

The present invention relates generally to network communications, and more particularly, but not exclusively, to fingerprinting a web browser using features of how the browser responds to HyperText Markup Language (HTML) that deviates from an HTML specification.

### TECHNICAL BACKGROUND

There is a tremendous amount of data, movies, music, photographs, texts, and other types of digital content available over the network today, and the amount of available content continues to grow. There are also hundreds of thousands, if not more, of different types of computing devices being used to access some of this content. However, not all of the available content is in a format that enables the content to be readily accessed by any of the different types of computing devices. Therefore, when a request for content is received, many network devices may seek to determine information about the requesting device, so that the content might be served in a format that the requesting device might be able to use. One such mechanism used to determine information about the requesting device includes inspecting a user-agent string. In some instances, computing devices handling, for example web application traffic over HyperText Transfer Protocol (HTTP) might inspect a user-agent header value for the user-agent string. The user-agent string may then be parsed or looked up in a database that maps the user-agent string to a class of web browsers or to a specific version of the web browser class. Once the web browser is identified, browser-specific resource may then be served to the requesting device.

However, while this approach is popular, it is not always accurate as user-agent strings might not be available, or even intentionally not sent in HTTP headers. To make matters worse, user-agent strings can be spoofed or altered; thus, causing unintended web application behavior. Thus, it is with respect to these considerations and others that the present invention has been made.

US 2012/047199 A1 (PATRAWALA ZAKIR [US] ET AL) identifies a type of mobile device using a user-agent property of the browser of the requesting device which property can be identified, for example, in the incoming request message, such as in a header of an HTTP request message.

The publication NICK NIKIFORAKIS ET AL: "Cookieless Monster: Exploring the Ecosystem of Web-Based Device Fingerprinting", 2013 IEEE SYMPOSIUM ON SECURITY AND PRIVACY, 19 May 2013, pages 541-555, XP032431346, discloses an experimental fingerprinting setup in which fingerprinting techniques focus on special, browser populated JavaScript objects.

### BRIEF DESCRIPTION OF THE DRAWINGS

Non-limiting and non-exhaustive embodiments are described with reference to the following drawings. In the drawings, like reference numerals refer to like parts throughout the various figures unless otherwise specified.

For a better understanding of the described embodiments, reference will be made to the following Detailed Description, which is to be read in association with the accompanying drawings, wherein:
FIGURE 1 shows components of an illustrative environment in which the described embodiments may be practiced;
FIGURE 2 shows one embodiment of a client device usable within the illustrative environment of FIG. 1;
FIGURE 3 shows one embodiment of a network device usable to generate web browser fingerprints; and
FIGURE 4 illustrates a logical flow of usable to generate web browser fingerprints based on how the web browser responds to malformed HyperText Markup Language (HTML).

### DETAILED DESCRIPTION

In the following detailed description of exemplary embodiments, reference is made to the accompanied drawings, which form a part hereof, and which show by way of illustration examples by which the described embodiments may be practiced. Sufficient detail is provided to enable those skilled in the art to practice the described embodiments, and it is to be understood that other embodiments may be utilized, and other changes may be made, without departing from the scope. Furthermore, references to "one embodiment" are not required to pertain to the same or singular embodiment, though they may. The following detailed description is, therefore, not to be taken in a limiting sense, and the scope of the described embodiments is defined only by the appended claims.

Throughout the specification and claims, the following terms take the meanings explicitly associated herein, unless the context clearly dictates otherwise. As used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."

As used herein, the term "network connection" refers to a collection of links and/or software elements that enable a computing device to communicate with another computing device over a network. One such network connection may be a Transmission Control Protocol (TCP) connection. TCP connections are virtual connections between two network nodes, and are typically established through a TCP handshake protocol. The TCP protocol is described in more detail in Request for Comments (RFC) 793, available from the Internet Engineering Task Force (IETF). A network connection "over" a particular path or link refers to a network connection that employs the specified path or link to establish and/or maintain a communication. The term "node" refers to a network element that typically interconnects one or more devices, or even networks.

HTML is a markup language used for creating web pages and other information that can be displayed in a web browser. HTML specifications define the structural content, rules, semantics, and so forth useable to create structured documents. The HTML specifications may be found at the World Wide Web Consortium's (W3C) website. HTML is also available as a standard from the International Standard Bodies International Organization for Standardization (ISO)/ International Electrotechnical Commission (IEC). One example, HTML5, is recognized as the fifth revision of the HTML standard, and its specifications, is available from the W3C and/or ISO/IEC.

Briefly, HTML is typically written in the form of HTML elements consisting of tags, within the web page content. HTML tags most commonly come in pairs, where the first tag in a pair is a start tag, and the second tag is the end tag (sometimes called opening tags and closing tags). In between these tags web designers add content that may be displayed at a web browser. When the HTML content follows the specification, the content is considered well-formed, failure to follow the specification may result in what is considered as malformed (or invalid) HTML content. Depending on a particular class or version of a web browser, the web browser may respond differently to malformed HTML content. For example, in some instances, the web browser may be unable to display or enable playing of content. In other instances, the web browser might experience an error that the web browser is unable to recover from. In still other instances, the web browser might simply ignore or otherwise operate to recover from the malformed content, or even perform entirely different actions.

The following briefly provides a simplified summary of the subject innovations in order to provide a basic understanding of some aspects. This brief description is not intended as an extensive overview. It is not intended to identify key or critical elements, or to delineate or otherwise narrow the scope. Its purpose is merely to present some concepts in a simplified form as a prelude to the more detailed description that is presented later.

Briefly stated, subject innovations are directed toward identifying a web browser by targeting a document parser component in a layout engine of a web browser. Malformed HTML may be provided to a client device having the web browser. Based on how the web browser/layout engine responds to the received malformed HTML, a fingerprint can be generated identifying a class, type, and other features of the web browser/layout engine. Other fingerprinting techniques may be combined with this malformed HTML approach to improve an accuracy of web browser/layout engine identification, or to be used to detect/counter user-agent spoofing. Identification of the web browser/layout engine may then be used, among other things, to provide web content that is formatted to be useable by the receiving client device. As used herein, "web browser/layout engine," refers to a "web browser," a "layout engine," and/or both a web browser and a layout engine.

### Illustrative Operating Environment

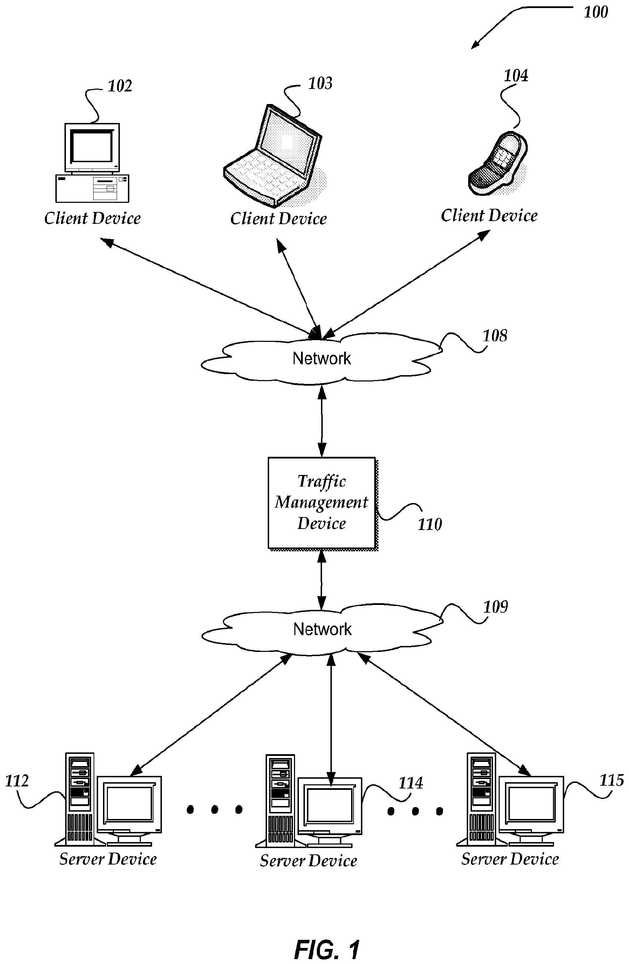

FIGURE 1 shows components of an illustrative environment 100 in which the described embodiments may be practiced. Not all the components may be required to practice the described embodiments, and variations in the arrangement and type of the components may be made without departing from the scope of the described embodiments. FIGURE 1 illustrates client devices 102-104, networks 108-109, server devices 112-115, and Traffic Management Device (TMD) 110.

Generally, client devices 102-104 may include virtually any computing device capable of connecting to another computing device and receiving information. Such devices may include personal computers, multiprocessor systems, microprocessor-based or programmable consumer electronics, network devices, server devices, and the like. Client devices 102-104 may also include portable devices such as, cellular telephones, smart phones, display pagers, radio frequency (RF) devices, infrared (IR) devices, Personal Digital Assistants (PDAs), handheld computers, wearable computers, tablet computers, integrated devices combining one or more of the preceding devices, and the like. Client devices 102-104 may also include virtual computing devices running in a hypervisor or some other virtualization environment. As such, client devices 102-104 may range widely in terms of capabilities and features.

A web-enabled client device may include a web browser application that is configured to receive and to send web pages, web-based messages, and the like. The web browser application may be configured to receive and display graphics, text, multimedia, and the like, employing virtually any web based language, including a wireless application protocol messages (WAP), and the like. In one embodiment, the browser application is enabled to employ Handheld Device Markup Language (HDML), Wireless Markup Language (WML), WMLScript, JavaScript, Standard Generalized Markup Language (SMGL), HTML, eXtensible Markup Language (XML), Compact HTML (cHTML), EXtensible HTML (xHTML), or the like, to display and send a message.

Client devices 102-104 also may include at least one other client application that is configured to receive content from another computing device. The client application may include a capability to provide and receive textual content, graphical content, audio content, and the like. The client application may further provide information that identifies itself, including a type, capability, name, and the like. In one embodiment, client devices 102-104 may uniquely identify themselves through any of a variety of mechanisms, including a phone number, Client Identification Number (MIN), an electronic serial number (ESN), or other client device identifier. The information may also indicate a content format, and/or a capability of the client device. For example, in one embodiment, the client application may be configured to provide information about a type of client device, an application available on the client device, or the like. In some embodiments, the client application might operate as a user-agent that provides a profile of the client device. In some embodiments, the profile may be based on a standardized user agent profile, such as that defined by the User Agent Profile Specification available from the Wireless Application Protocol Forum, Ltd. (www.wapforum.org). Another example of obtaining information about a mobile terminal includes using Composite Capability/Preference Profiles (CC/PP), defined by the World Wide Web Consortium (www.w3c.org). A user agent profile or other standardized profile generally includes headers or other information that provides attributes of the client device such as a screen size, a screen resolution, as well as a type, class, or version of a web browser on the client device. In some embodiments, a user-agent may provide the profile information with a request or other communication with another network device. In other instances, the profile information might be provided based upon a request to the client device from the other network device.

In some instances, a user-agent might be configured not to provide profile information about the client device to another network device. In these instances, a requesting network device might employ any of a variety of querying techniques to query the client device, and based on how the client device responds, intuit the type, class, and/or version of a web browser/layout engine on the client device. In some embodiments, as discussed further below, results from the queries and the user-agent information may be compared to determine whether there are inconsistencies. In at least one embodiment, the inconsistencies might indicate possible spoofing of the client device's user-agent information.

As further shown in FIG. 1, networks 108-109 are configured to couple network enabled devices, such as client devices 102-104, TMD 110, and server devices 112-115, with other network enabled devices. Networks 108-109 are enabled to employ any form of computer readable media for communicating information from one electronic device to another. In one embodiment, network 108 may include the Internet, and may include local area networks (LANs), wide area networks (WANs), direct connections, such as through a universal serial bus (USB) port, other forms of computer-readable media, or any combination thereof. On an interconnected set of LANs, including those based on differing architectures and protocols, a router may act as a link between LANs to enable messages to be sent from one to another. Also, communication links within LANs typically include fiber optics, twisted wire pair, or coaxial cable, while communication links between networks may utilize analog telephone lines, full or fractional dedicated digital lines including T1, T2, T3, and T4, Integrated Services Digital Networks (ISDNs), Digital Subscriber Lines (DSLs), wireless links including satellite links, or other communications links known to those skilled in the art.

Networks 108-109 may further employ a plurality of wireless access technologies including, but not limited to, 2nd (2G), 3rd (3G), 4th (4G) generation radio access for cellular systems, Wireless-LAN, Wireless Router (WR) mesh, and the like. Access technologies such as 2G, 3G, 4G, and future access networks may enable wide area coverage for network devices, such as client devices 102-104, or the like, with various degrees of mobility. For example, networks 108-109 may enable a radio connection through a radio network access such as Global System for Mobil communication (GSM), General Packet Radio Services (GPRS), Enhanced Data GSM Environment (EDGE), Wideband Code Division Multiple Access (WCDMA), and the like.

Furthermore, remote computers and other related electronic devices could be remotely connected to either LANs or WANs via a modem and temporary telephone link, a DSL modem, a cable modem, a fiber optic modem, an 802.11 (Wi-Fi) receiver, and the like. In essence, networks 108-109 include any communication method by which information may travel between one network device and another network device.

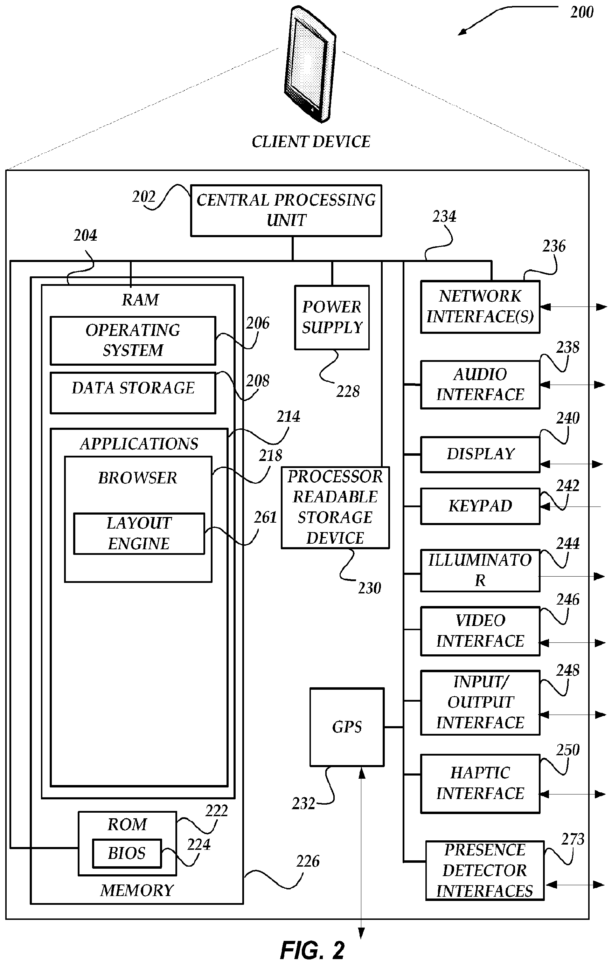

One embodiment of a Traffic Management Device 110 is described in more detail below in conjunction with FIG. 2. Briefly, however, TMD 110 includes virtually any network device that manages network traffic. Such devices include, for example, routers, proxies, firewalls, load balancers, cache devices, application accelerators, devices that perform network address translation, any combination of the preceding devices, or the like. TMD 110 may control, for example, the flow of data packets delivered to or forwarded from an array of server devices, such as server devices 112-115.

TMD 110 may direct a request for a resource to a particular server device based on network traffic, network topology, capacity of a server device, content requested, and a host of other traffic distribution mechanisms. TMD 110 may receive data packets from and transmit data packets to the Internet, an intranet, or a local area network accessible through another network. TMD 110 may recognize packets that are part of the same communication, flow, and/or stream and may perform special processing on such packets, such as directing them to the same server device so that state information is maintained. TMD 110 also may support a wide variety of network applications such as Web browsing, email, telephony, streaming multimedia and other traffic that is sent in packets. The BIG-IP® family of traffic managers, by F5 Networks of Seattle, WA, are examples of TMDs.

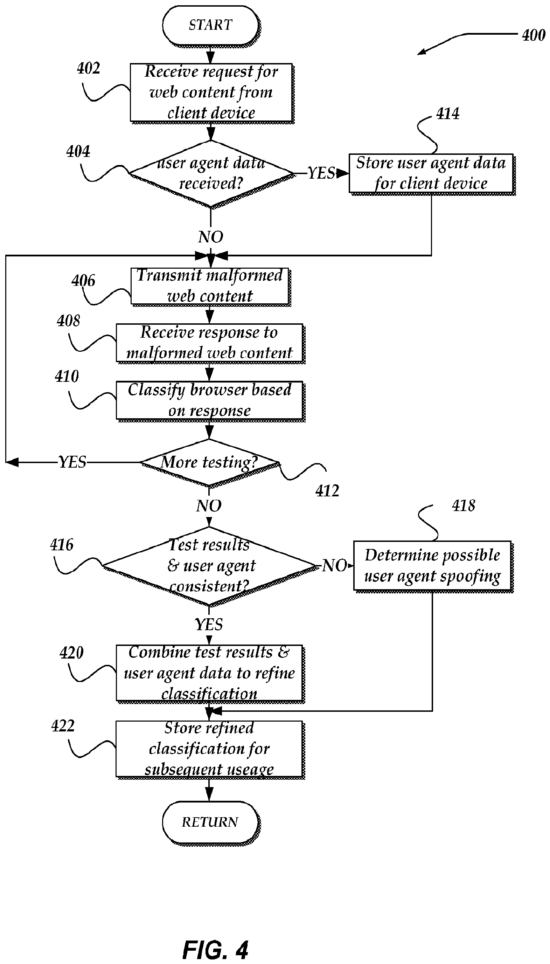

In one embodiment, TMD 110 may employ a process described further below in conjunction with FIG. 4 to generate a fingerprint that is usable to classify a web browser/layout engine on a client device by looking for uniqueness in the interpretation of HTML that deviates from an HTML specification (e.g., referred to herein as "malformed HTML", "malformed HTML content", "malformed HTML test," or simply "test"). Briefly, however, TMD 110 may receive a request for content from a client device, such as client devices 102-104. TMD 110 may examine the request and/or related information from the client device to determine whether the request is HTML based, and if so, whether a user-agent header value is available that may be mapped to this request to be coming from a particular class and/or version of a web browser. In one embodiment, a user-agent string may be found within the user-agent header value. However, user-agent information might not be available from the client device. In any event, malformed HTML content may be sent to the client device, and based on how the web browser/layout engine on the client device responds, the web browser/layout engine may be classified. The classification can subsequently be used to format or otherwise access content that is likely to be in a format that is useable by the identified web browser/layout engine.

Server devices 112-115 may include any computing device capable of communicating packets to another network device. Each packet may convey a piece of information. A packet may be sent for handshaking, i.e., to establish a connection or to acknowledge receipt of data. The packet may include information such as a request, a response, or the like. Generally, packets received by server devices 112-115 will be formatted according to TCP/IP, but they could also be formatted using another transport protocol, such as SCTP, X.25, NetBEUI, IPX/SPX, token ring, similar IPv4/6 protocols, and the like. Moreover, the packets may be communicated between server devices 112-115, TMD 105, and client device 102 employing HTTP, HTTPS, or any of a variety of protocols.

In one embodiment, server devices 112-115 are configured to operate as a website server. However, server devices 112-115 are not limited to web server devices, and may also operate a messaging server, a File Transfer Protocol (FTP) server, a database server, content server, and the like. Additionally, each of server devices 112-115 may be configured to perform a different operation. Thus, for example, server device 112 may be configured as a messaging server, while server device 113 is configured as a database server. Moreover, while server devices 112-115 may operate as other than a website, they may still be enabled to receive an HTTP communication, as well as a variety of other communication protocols.

Devices that may operate as server devices 112-115 and TMD 110 include personal computers, desktop computers, multiprocessor systems, microprocessor-based or programmable consumer electronics, network PCs, server devices, and the like.

### Illustrative Client Device

FIGURE 2 shows one embodiment of client device 200 that may be included in a system implementing the invention. Client device 200 may represent any of a variety of platforms usable to perform actions as disclosed within. Client device 200 may include many more or less components than those shown in FIGURE 2. However, the components shown are sufficient to disclose an illustrative embodiment for practicing the present invention. Client device 200 may represent, for example, one embodiment of at least one of client devices 101-104 of FIGURE 1.

As shown in the figure, client device 200 includes at least one central processing unit ("CPU") 202 (also called a processor, further, client device 200 may include more than one processor) in communication with a mass memory 226 via a bus 234. Client device 200 also includes a power supply 228, one or more network interfaces 236, an audio interface 238, a display 240, a keypad 242, an illuminator 244, a video interface 246, an input/output interface 248, a haptic interface 250, and a global positioning systems ("GPS") receiver 232.

Power supply 228 provides power to client device 200. A rechargeable or non-rechargeable battery may be used to provide power. The power may also be provided by an external power source, such as an alternating current ("AC") adapter or a powered docking cradle that supplements and/or recharges a battery.

Client device 200 may optionally communicate with a base station (not shown), or directly with another computing device. Network interface 236 includes circuitry for coupling client device 200 to one or more networks, and is constructed for use with one or more communication protocols and technologies including, but not limited to, GSM, code division multiple access ("CDMA"), time division multiple access ("TDMA"), user datagram protocol ("UDP"), transmission control protocol/Internet protocol ("TCP/IP"), Short Message Service ("SMS"), GPRS, WAP, ultra wide band ("UWB"), Institute of Electrical and Electronics Engineers ("IEEE") 802.16 Worldwide Interoperability for Microwave Access ("WiMax"), session initiated protocol/real-time transport protocol ("SIP/RTP"), or any of a variety of other wired and/or wireless communication protocols. Network interface 236 is sometimes known as a transceiver, transceiving device, or network interface card ("NIC").

Audio interface 238 is arranged to produce and receive audio signals such as the sound of a human voice. For example, audio interface 238 may be coupled to a speaker and microphone (not shown) to enable telecommunication with others and/or generate an audio acknowledgement for some action.

Display 240 may be an LCD, gas plasma, light emitting diode ("LED"), or any other type of display used with a computing device. Display 240 may also include a touch sensitive screen arranged to receive input from an object such as a stylus or a digit from a human hand.

Moreover, display 240 may be configured to employ any of a variety of network connection types, including, but not limited to High-Bandwidth Digital Content Protection (HDCP) connection types, Display Port (DP), Digital Visual Interface (DVI), and High-Definition Multimedia Interface (HDMI), as well as Gigabit Video Interface (GVIF), Standard-definition (SD), Unified Display Interface (UDI), WiDi.

Keypad 242 may comprise any input device arranged to receive input from a user. For example, keypad 242 may include a push button numeric dial, or a keyboard. Keypad 242 may also include command buttons that are associated with selecting and sending images.

Illuminator 244 may provide a status indication and/or provide light. Illuminator 244 may remain active for specific periods of time or in response to events. For example, when illuminator 244 is active, it may backlight the buttons on keypad 242 and stay on while the client device is powered. Also, illuminator 244 may backlight these buttons in various patterns when particular actions are performed, such as dialing another client device. Illuminator 244 may also cause light sources positioned within a transparent or translucent case of the client device to illuminate in response to actions.

Video interface 246 is arranged to capture video images, such as a still photo, a video segment, an infrared video, or the like. For example, video interface 246 may be coupled to a digital video camera, a web-camera, or the like. Video interface 246 may comprise a lens, an image sensor, and other electronics. Image sensors may include a complementary metal-oxide-semiconductor ("CMOS") integrated circuit, charge-coupled device ("CCD"), or any other integrated circuit for sensing light.

Client device 200 also comprises input/output interface 248 for communicating with external devices, such as a headset, or other input or output devices not shown in FIGURE 2. Input/output interface 248 can utilize one or more communication technologies, such as USB, infrared, Bluetooth™, or the like. Haptic interface 250 is arranged to provide tactile feedback to a user of the client device. For example, the haptic interface 250 may be employed to vibrate client device 200 in a particular way when another user of a computing device is calling.

GPS transceiver 232 can determine the physical coordinates of client device 200 on the surface of the Earth. GPS transceiver 232, in some embodiments, may be optional. GPS transceiver 232 typically outputs a location as latitude and longitude values. However, GPS transceiver 232 can also employ other geo-positioning mechanisms, including, but not limited to, triangulation, assisted GPS ("AGPS"), Enhanced Observed Time Difference ("E-OTD"), Cell Identifier ("CI"), Service Area Identifier ("SAI"), Enhanced Timing Advance ("ETA"), Base Station Subsystem ("BSS"), or the like, to further determine the physical location of client device 200 on the surface of the Earth. It is understood that under different conditions, GPS transceiver 232 can determine a physical location within millimeters for client device 200; and in other cases, the determined physical location may be less precise, such as within a meter or significantly greater distances. In one embodiment, however, mobile device 200 may through other components, provide other information that may be employed to determine a physical location of the device, including for example, a Media Access Control ("MAC") address, IP address, or the like.

Mass memory 226 includes a Random Access Memory ("RAM") 204, a Read-only Memory ("ROM") 222, and other storage means. Mass memory 226 illustrates an example of computer readable storage media (devices) for storage of information such as computer readable instructions, data structures, program modules or other data. Mass memory 226 stores a basic input/output system ("BIOS") 224 for controlling low-level operation of client device 200. The mass memory also stores an operating system 206 for controlling the operation of client device 200. It will be appreciated that this component may include a general-purpose operating system such as a version of UNIX, or LINUX™, or a specialized client communication operating system such as Windows Mobile™, or the Symbian® operating system. The operating system may include, or interface with a Java virtual machine module, or other machine module, that enables control of hardware components and/or operating system operations via Java application programs, or other types of program scripts, or the like.

Mass memory 226 further includes one or more data storage 208, which can be utilized by client device 200 to store, among other things, applications 214 and/or other data. For example, data storage 208 may also be employed to store information that describes various capabilities of client device 200. The information may then be provided to another device based on any of a variety of events, including being sent as part of a header during a communication, sent upon request, or the like. For example, such information might be sent as user-agent data. Data storage 208 may also be employed to store social networking information including address books, buddy lists, aliases, user profile information, or the like. Further, data storage 208 may also store messages, webpage content, or any of a variety of user generated content. In one embodiment, data storage 208 may receive and store content, identifiers, or the like. At least a portion of the information may also be stored on another component of network device 200, including, but not limited to computer readable storage device 230, a disk drive or other computer-readable storage device (not shown) within client device 200.

Applications 214 may include computer executable instructions which, when executed by client device 200, transmit, receive, and/or otherwise process messages (e.g., SMS, Multimedia Message Service ("MMS"), instant messages ("IM"), email, and/or other messages), audio, video, and enable telecommunication with another user of another client device. Other examples of application programs include calendars, search programs, email clients, IM applications, SMS applications, voice over Internet Protocol ("VOIP") applications, contact managers, task managers, transcoders, database programs, word processing programs, security applications, spreadsheet programs, games, search programs, and so forth. Applications 214 may include browser 218 acting as a user-agent, which further includes, among other components, layout engine 261.

Browser 218 may include virtually any application configured to receive and display graphics, text, multimedia, and the like, employing virtually any web based protocol. In one embodiment, the browser application is enabled to employ HDML, WML, WMLScript, JavaScript, other scripting languages, SGML, HTML, XML, and the like, to display and send a message. However, any of a variety of other web-based programming languages may be employed. In one embodiment, browser 218 may enable a user of client device 200 to provide and/or receive content from another computing device. Although browser 218 is described herein, it should be noted that there are a plurality of other applications that may operate as a user agent configured to request and/or access content. Thus, other user agents may also be included within client device 200.

Layout engine 261 (sometimes also referred to as a rendering engine) represents a software component that is configured to take mark up content, such as HTML, XML, image files, and the like, and formatting information, such as Cascade Style Sheets (CSS), Extensible Style Sheet Language (XSL), and the like, and displays the formatted content on a computer screen (or otherwise makes the content playable, or otherwise accessible, at the computing device). Layout engine 261 may employ characteristics of the screen, including content area of a window to display the content. Layout engine 261 may be embedded within browser 218; however, in other embodiments, layout engine 261 may reside external to browser 218. For example, layout engine 261 might reside within an email client, e-book reader, online help system, or virtually any other application within applications 214 that receives and displays web content.

In some embodiments, layout engine 261 may wait for all the content to be received before rendering a page for display, or may begin rendering before all the content is received, such as for streamed content, unstyled content, or the like. Moreover, layout engine 261 may also be configured to manage received links, forms, cookies, client-side scripting, plug-in loading, and other matters related to enabling access to received web content.

Layout engine 261 may represent any of a variety of engines. For example, layout engine 261 might represent KDE's open-source KHTML engine as used in KDE's Konqueror web browser. Layout engine 261 might also represent various engines based on WebKit, the rendering engine in Apple's Safari, Google's Chrome web browsers, or the like. Layout engine 261 might also represent Gecko, Mozilla's open-source engine; Trident, Internet Explorer's engine; or even Opera Software's proprietary Presto engine. Layout engine 261 is not constrained to these non-limiting, non-exhaustive examples, and it should be understood that layout engine 261 may represent any engine used to transform received web content for access at a computer device.

As layout engine 261 may represent any engine, it should be understood that some of the engines might respond to received content in a manner that is different from how another layout engine responds. This might be particularly valid for malformed HTML, or other malformed content, that is formed inconsistent or in violation of associated standards as defined in a specification for the content. How layout engine 261 responds may be used as a fingerprint to classify which engine layout engine 261 and/or browser 218 is in use, as described further below.

### Illustrative Network Device

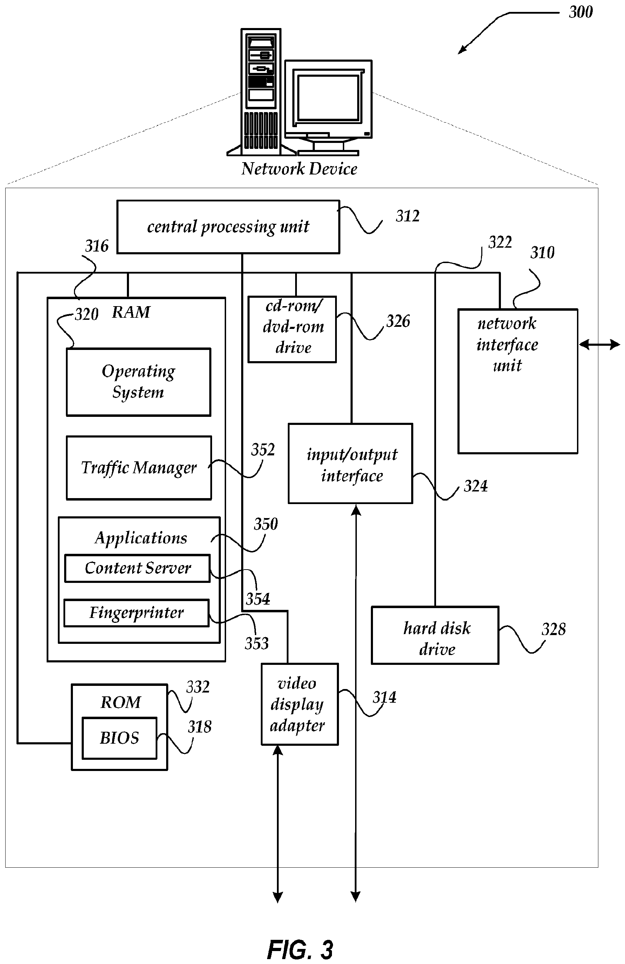

FIGURE 3 shows one embodiment of a network device, according to one embodiment of the invention. Network device 300 may include many more or less components than those shown. The components shown, however, are sufficient to disclose an illustrative embodiment for practicing the invention. Network device 300 may represent, for example, TMD 110 of FIGURE 1.

Network device 300 includes non-transitory central processing unit 312 (also known as a processor, or CPU), video display adapter 314, and a mass memory, all in communication with each other via bus 322. The mass memory generally includes RAM 316, ROM 332, and one or more permanent mass storage devices, such as hard disk drive 328, tape drive, optical drive, and/or floppy disk drive. The mass memory stores operating system 320 for controlling the operation of network device 300. Network device 300 also includes applications 350, and traffic manager 352. Applications 350 further include content server 354 and fingerprinter 354.

As illustrated in FIGURE 3, network device 300 also can communicate with the Internet, or some other communications network via network interface unit 310, which is constructed for use with various communication protocols including the TCP/IP protocol. Network interface unit 310 is sometimes known as a transceiver, transceiving device, or network interface controller (NIC) card.

The mass memory as described herein illustrates another type of computer readable media, namely computer storage devices. Computer storage devices may include volatile, nonvolatile, removable, and non-removable devices implemented in any method or technology for non-transitory storage of information, such as computer readable instructions, data structures, program modules, or other data. Examples of computer storage devices include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other physical non-transitory medium which can be used to store the desired information and which can be accessed by a computing device.

The mass memory also stores program code and data. One or more applications 350 are loaded into mass memory and run on operating system 320. Examples of application programs may include email programs, routing programs, schedulers, calendars, database programs, word processing programs, HTTP programs, traffic management programs, security programs, and so forth. Applications 350 also include content server 354 and fingerprinter 353.

Network device 300 may also include an SMTP handler application for transmitting and receiving e-mail, an HTTP handler application for receiving and handing HTTP requests, and an HTTPS handler application for handling secure connections. The HTTPS handler application may initiate communication with an external application in a secure fashion. Moreover, network device 300 may further include applications that support virtually any secure connection, including TLS, TTLS, EAP, SSL, IPSec, and the like.

Network device 300 may also include traffic manager 352 that is configured to control the flow of data packets delivered to and forwarded from various devices. Traffic manager 352 may direct a request for a resource to a particular device based on network traffic, network topology, capacity of a device, content requested, and a host of other traffic distribution mechanisms. Traffic manager 352 may receive data packets from and transmit data packets to the Internet, an intranet, or a local area network accessible through another network. Traffic manager 352 may recognize packets that are part of the same communication, flow, and/or stream and may perform special processing on such packets, such as directing them to the same server so that state information is maintained.

Network device 300 may also include input/output interface 324 for communicating with external devices, such as a mouse, keyboard, scanner, or other input devices not shown in FIGURE 3. Likewise, network device 300 may further include additional mass storage facilities such as CD-ROM/DVD-ROM drive 326 and hard disk drive 328. Hard disk drive 328 may be utilized to store, among other things, application programs, databases, and the like.

In one embodiment, the network device 300 includes at least one Application Specific Integrated Circuit (ASIC) chip (not shown) coupled to bus 322. The ASIC chip can include logic that performs some of the actions of network device 300. For example, in one embodiment, the ASIC chip can perform a number of packet processing functions for incoming and/or outgoing packets. In one embodiment, the ASIC chip can perform at least a portion of the logic to enable the operations of fingerprinter 353. Fingerprinter 353 is configured to perform actions that include those discussed below in conjunction with FIG. 4 that includes generating a fingerprint useable to classify/identify a web browser/layout engine for a client device.

In one embodiment, network device 300 can further include one or more field-programmable gate arrays (FPGA) (not shown), instead of, or in addition to, the ASIC chip. A number of functions of the network device can be performed by the ASIC chip, the FPGA, by CPU 312 with instructions stored in memory, or by any combination of the ASIC chip, FPGA, and CPU.

Content server 354 represent any of a variety of services that are configured to provide content, including messages, over a network to another computing device. Thus, content server 354 includes, for example, a web server, an FTP server, a database server, a content server, or the like. Content server 354 may provide the content including messages over the network using any of a variety of formats including, but not limited to WAP, HDML, WML, SGML, HTML, XML, Compact HTML ("cHTML"), Extensible HTML ("xHTML"), or the like. Content server 354 may also be configured to enable a user of a client device, such as client devices 101-104 of FIG. 1, to browse content, such as streams of content, and select content for display/play on the client device. Further, content server 354 may be configured to employ fingerprinter 353 to identify a web browser/layout engine associated with a client device that requests web content. Fingerprinter 353 may perform actions such as described below in conjunction with FIG. 4 to classify the web browser/layout engine. Such classification may then be employed by content server 354, or other application, to provide content that is formatted to be useable by the requesting client device. In one embodiment, content server 354 may perform the formatting of content; however, in other instances, content server 354 may select formatted content from a plurality of different formatted content based on the classification of the web browser/layout engine.

### Generalized Operation

The operation of certain aspects will now be described with respect to FIGURE 4. FIGURE 4 illustrates a logical flow of usable to generate web browser fingerprints based on how the web browser responds to malformed HyperText Markup Language (HTML). Process 400 of FIG. 4 may be performed by one or more processors within TMD 110 and/or within one or more of server devices 112-115 of FIG. 1 (or other devices). Moreover, process 400 may be stored on a non-transitory computer-readable storage device or medium as computer-executable instructions, which when installed onto a processor (central processing unit) is configured to perform the actions of process 400.

In any event, process 400 begins, after a start block, at block 402 where a request for web content is received from a client device. In one embodiment, the request employs an HTTP protocol and includes a request for HTML or similar based web content.

Flowing next to decision block 404, a determination is made whether a user-agent header or headers, values, profiles, or the like is received. If so, processing flows to block 414; otherwise processing flows to block 406. At block 414, the user-agent header(s) may be parsed to obtain information about a web browser and/or layout engine in use on the requesting client device. In one embodiment, a user-agent header value may be inspected for a user-agent string. In one embodiment JavaScript or other mechanisms may be used to obtain the web browser/layout engine information, which may then be mapped to other information about the requesting client device, and stored for later use. The other client device information may include, but is not limited to, network address information (e.g., source Internet Protocol address/port number), or other information including that which is discussed above. Processing then flows to block 406.

At block 406, malformed HTML, and/or other web content is transmitted to the requesting client device. As noted above, certain web browser/layout engines might not respond to specific malformed HTML, and/or instead make an improper, wrong interpretation from the markup. If such interpretation is unique among other web browser/layout engines, this malformed HTML can be used to "uniquely" fingerprint this class and/or version of web browser/layout engine. That is, the fingerprint may be used to classify the web browser/layout engine.

In one embodiment, an analysis of various web browser/layout engines may be performed to generate a database, or other set of malformed HTML. The following provides a non-exhaustive, non-limiting example of some of the possible types of malformed HTML that may be used to uniquely classify a web browser/layout engine.

For example, the following malformed HTML may cause an Internet Explorer browser to fetch a uniform resource locator (URL), or uniform resource identifier (URI), pointed to by the script "src", while other browsers may not.
...<script src="url ... "> EOF
where, EOF denotes the End Of File (end of document). The use of this malformed HTML fingerprints the layout engine to be Trident, which is part of an Internet Explorer web browser. As a result, process 400 may then use the URL response received as a signaling mechanism to channel this information back and enforce/invalidate session actions associated with the requesting client device.

Conversely, the following malformed HTML is directed towards causing Chrome browsers to not see the SCRIPT element following the comment opening. Other browsers would be expected to see the SCRIPT, and would fetch the URL. An example of a browser that is expected to see the SCRIPT might include the Safari web browser.
<! -- ><script src="url..."></script>EOF

Thus, this malformed HTML fingerprints the web browser to be Chrome even though its layout engine is likely to be WebKit, which may also be used by Safari.

A variation of the HTML above is directed to hide the SCRIPT element from all browsers except Opera:
<! -- -- ><script src="url ..."></script> -- >EOF

Again, it should be understood many other malformed HTML tests may be generated to further fingerprint and thereby classify the web browser/layout engine in use by the requesting client device. In one embodiment, one or more pages might be served to the requesting client in response to the initial request, or even included within a web page that the client device is served, and from which the client device requests web content. That is, one or more pages served to the client device might include one or more malformed HTML tests useable to classify the client device's web browser/layout engine.

In any event, processing flows to block 408, where responses are received (or not received, depending upon the type of malformed HTML used). Continuing to block 410, based on the response/lack of response, the web browser/layout engine is classified. It should be understood that version information may also be obtained where different versions of a given browser and/or layout engine respond differently to a given malformed HTML test. Thus, the classification of the web browser/layout engine may include a variety of information.

Flowing next to decision block 412, a determination is made whether to continue to present more testing to the requesting client device. A decision to continue testing might be based on a confidence level for the classification so far. For example, results from the testing done so far might be combined to provide a value or rating of confidence for the classification performed. Should the value be below some desired threshold, then it might be determined that the results do not have a sufficient confidence level. Therefore, more testing might be performed by flowing back to block 406. Should it be determined that the results provide a sufficient confidence level, then processing flows to decision block 416.

At decision block 416, a determination is made whether (when user agent data is available) the user agent data and the test results of classifying the web browser/layout engine are consistent. In one embodiment, the information might indicate a significantly different web browser/layout engine. In one embodiment, where the confidence in the results of the malformed HTML testing is sufficiently high, then it might be suspected that the user agent data has been spoofed. In which case, processing might flow to block 418, where various analyses might be performed on the user agent data. When it determined that the user agent data is spoofed, then various actions might be performed, including not sending content to the requesting device, or the like. In one embodiment, processing might flow to block 422.

If it is determined that the results are consistent, at decision block 416, then processing may flow to block 420 where the user agent data and the test results may be combined to improve/refined the classification of the web browser/layout engine. For example, the user agent might indicate a version of the web browser, while the test results were unable to make such a determination. In any event, processing may then flow to block 422, where this refined classification information may be mapped to the client device and stored for subsequent use. For example, when web content may then be provided to the requesting client device in a format that is useable based on the classification of the web browser/layout engine. Processing may then return to a calling process.

It will be understood that figures, and combinations of steps in the flowchart-like illustrations, can be implemented by computer program instructions. These program instructions may be provided to a processor to produce a machine, such that the instructions, which execute on the processor, create means for implementing the actions specified in the flowchart block or blocks. The computer program instructions may be executed by a processor to cause a series of operational steps to be performed by the processor to produce a computer implemented process such that the instructions execute on the processor to provide steps for implementing the actions specified in the flowchart block or blocks. These program instructions may be stored on a computer readable medium or machine readable medium, such as a computer readable storage medium.

Accordingly, the illustrations support combinations of means for performing the specified actions, combinations of steps for performing the specified actions and program instruction means for performing the specified actions. It will also be understood that each block of the flowchart illustration, and combinations of blocks in the flowchart illustration, can be implemented by modules such as special purpose hardware-based systems which perform the specified actions or steps, or combinations of special purpose hardware and computer instructions.

The above specification, examples, and data provide a complete description of the manufacture and use of the composition of the described embodiments. Since many embodiments can be made without departing from the scope of this description, the embodiments reside in the claims hereinafter appended.

## Claims

1. A network device (110), comprising:
a memory (316, 332, 328) configured to be capable of storing instructions;
a network interface (310) configured to be capable of receiving and transmitting content over a network (108, 109); and
one or more processors (312) that are configured to be capable of executing the instructions stored in the memory (316, 332, 328) to perform actions, including:
receiving from a client device (102, 103, 104), a request for web content;
providing to the client device (102, 103, 104) at least one test using malformed HyperText Markup Language (HTML) content, wherein the malformed HTML content is HTML content that deviates from an HTML specification;
receiving one or more responses to the provided at least one test from the client device (102, 103, 104);
using the one or more responses to determine a classification of one of a web browser (218) or a layout engine (261) in use by the client device (102, 103, 104), wherein the determined classification is based on how a document parser component in the web browser (218) or the layout engine (261) responded to the at least one test; and
using the determined classification to provide the requested web content in a format useable by the classified web browser (218) or layout engine (261).

2. The network device (110) of Claim 1, wherein the actions further comprise:
receiving from the client device (102, 103, 104) user agent data indicating a classification of the web browser (218); and
using the user agent data to refine the determined classification.

3. The network device (110) of Claim 2, wherein the actions further comprise:
comparing the user agent data classification with the determined classification to detect possible user agent spoofing.

4. The network device (110) of Claim 1, wherein the at least one test is useable to distinguish the web browser (218) type from other web browsers (218) using a same layout engine (261).

5. The network device (110) of Claim 1, wherein the at least one test is embedded in a web page served to the client device (102, 103, 104).

6. The network device (110) of Claim 1, wherein the at least one test includes a malformed web content with a script that is configured such that at least one web browser (218) ignores the script, while another web browser (218) operates on the script.

7. The network device (110) of claim 1, wherein the network device (110) is a traffic management device (TMD), interposed between a client device (102, 103, 104) and at least one server device, wherein:
said memory (316, 332, 328) is provided by one or more memory storage devices; and
in said actions that said one or more processors are configured to be capable of performing, the request for web content from the client device (102, 103, 104) is a request for HyperText Markup Language (HTML) content.

8. The TMD (110) of Claim 7, wherein the requested web content is obtained from the at least one server device.

9. The TMD (110) of Claim 7, wherein the actions further comprise:
receiving user agent data from the client device (102, 103, 104), the user agent data indicating a classification of the web browser (218);
comparing the user agent data classification with the determined classification to detect possible user agent spoofing; and
when user agent spoofing is detected, inhibiting forwarding of the requested content to the client device (102, 103, 104).

10. The TMD (110) of Claim 7, wherein the actions further comprise:
receiving from the client device (102, 103, 104) user agent data indicating a classification of the web browser (218); and
using the user agent data to refine the determined classification.

11. The TMD (110) of Claim 7, wherein the at least one test is embedded within a web page from which the client device (102, 103, 104) requests the HTML content.

12. The TMD (110) of Claim 7, wherein determining a classification further comprises determining at least one of a version of the web browser (218) or the layout engine (261).

13. The TMD (110) of Claim 7, wherein the at least one test includes malformed HTML content having a script, the malformed HTML content being arranged such that at least one web browser (218) or layout engine (261) ignores the script, while another web browser (218) or layout engine (261) operates on the script.

14. The TMD (110) of Claim 7, wherein the actions further comprise:
when it is determined that a rating determined for the one or more responses falls below a desired confidence threshold, then providing at least one additional test to the client device (102, 103, 104) using malformed HTML.

15. The TMD (110) of Claim 7, wherein a mapping of the determined classification to the client device (102, 103, 104) is stored for subsequent use for the client device (102, 103, 104).

## Patentansprüche

1. Netzwerkgerät (110), umfassend:
Einen Speicher (316, 332, 328), der ausgelegt ist, Befehle speichern zu können;
eine Netzwerkschnittstelle (310), die ausgelegt ist, Inhalt über ein Netzwerk (108, 109) empfangen und senden zu können; und
einen oder mehrere Prozessoren (312), die ausgelegt sind, die im Speicher (316, 332, 328) gespeicherten Befehle ausführen zu können, um Aktionen durchzuführen, die einschließen:
Empfangen von einem Client-Gerät (102, 103, 104) einer Anforderung nach Web-Inhalt;
Bereitstellen an das Client-Gerät (102, 103, 104) zumindest eines Tests unter Verwendung von fehlerhaftem "HyperText Markup Language" (HTML) Inhalt, wobei der fehlerhafte HTML-Inhalt, HTML-Inhalt ist, der von einer HTML-Spezifikation abweicht;
Empfangen einer oder mehrerer Antworten auf den zumindest einen bereitgestellten Test ab dem Client-Gerät (102, 103, 104);
Verwenden der einen oder mehreren Antworten, um eine Klassifizierung eines Web-Browsers (218) oder einer Layout-Engine (261) zu bestimmen, die vom Client-Gerät (102, 103, 104) in Gebrauch ist, wobei die bestimmte Klassifizierung darauf beruht, wie eine Dokument-Parser-Komponente im Web-Browser (218) oder der Layout-Engine (261) auf den zumindest einen Test reagierte; und
Verwenden der bestimmten Klassifizierung, um den angeforderten Web-Inhalt in einem Format bereitzustellen, das vom klassifizierten Web-Browser (218) oder von der Layout-Engine (261) verwendbar ist.

2. Netzwerkgerät (110) nach Anspruch 1, wobei die Aktionen ferner umfassen:
Empfangen vom Client-Gerät (102, 103, 104) von User-Agent-Daten, die eine Klassifizierung des Web-Browsers (218) anzeigen; und
Verwenden der User-Agent-Daten, um die bestimmte Klassifizierung zu verfeinern.

3. Netzwerkgerät (110) nach Anspruch 2, wobei die Aktionen ferner umfassen:
Vergleichen der User-Agent-Datenklassifizierung mit der bestimmten Klassifizierung, um mögliches User-Agent-Spoofing zu detektieren.

4. Netzwerkgerät (110) nach Anspruch 1, wobei der zumindest eine Test verwendbar ist, den Typ des Web-Browsers (218) von andren Web-Browsern (218) zu unterscheiden, welche die gleiche Layout-Engine (261) verwenden.

5. Netzwerkgerät (110) nach Anspruch 1, wobei der zumindest eine Test in einer Web-Seite eingebettet ist, die dem Client-Gerät (102, 103, 104) bereitgestellt wird.

6. Netzwerkgerät (110) nach Anspruch 1, wobei der zumindest eine Test einen fehlerhaften Web-Inhalt mit einem Skript einschließt, das derart ausgelegt ist, dass zumindest ein Web-Browser (218) das Skript ignoriert, während ein weiterer Web-Browser (218) nach dem Skript arbeitet.

7. Netzwerkgerät (110) nach Anspruch 1, wobei das Netzwerkgerät (110) ein Verkehrsmanagementgerät (TMD) ist, das zwischen einem Client-Gerät (102, 103, 104) und zumindest einem Server-Gerät liegt, wobei:
Der Speicher (316, 332, 328) durch ein oder mehrere Speichergeräte bereitgestellt wird; und
bei den Aktionen jener eine oder mehrere Prozessoren ausgelegt sind in der Lage zu sein, die Anforderung nach Web-Inhalt vom Client-Gerät (102, 103, 104) durchzuführen, die eine Anforderung nach "HyperText Markup Language" (HTML) Inhalt ist.

8. Das TMD (110) nach Anspruch 7, wobei der angeforderte Web-Inhalt vom zumindest einen Server-Gerät erlangt wird.

9. TMD (110) nach Anspruch 7, wobei die Aktionen ferner umfassen:
Empfangen von User-Agent-Daten vom Client-Gerät (102, 103, 104), wobei die User-Agent-Daten eine Klassifizierung des Web-Browsers (218) anzeigen;
Vergleichen der User-Agent-Datenklassifizierung mit der bestimmten Klassifizierung, um mögliches User-Agent-Spoofing zu detektieren; und
wenn User-Agent-Spoofing detektiert wird, Inhibieren der Weiterleitung des angeforderten Inhalts an das Client-Gerät (102, 103, 104).

10. TMD (110) nach Anspruch 7, wobei die Aktionen ferner umfassen:
Empfangen vom Client-Gerät (102, 103, 104) von User-Agent-Daten, die eine Klassifizierung des Web-Browsers (218) anzeigen; und
Verwenden der User-Agent-Daten, um die bestimmte Klassifizierung zu verfeinern.

11. TMD (110) nach Anspruch 7, wobei zumindest ein Test in einer Web-Seite eingebettet ist, von der das Client-Gerät (102, 103, 104) den HTML-Inhalt anfordert.

12. TMD (110) nach Anspruch 7, wobei das Bestimmen einer Klassifizierung ferner das Bestimmen zumindest einer Version des Web-Browsers (218) oder der Layout-Engine (261) umfasst.

13. TDM (110) nach Anspruch 7, wobei der zumindest eine Test einen fehlerhaften HTML-Inhalt mit einem Skript einschließt, wobei der fehlerhafte HTML-Inhalt derart eingerichtet ist, dass zumindest ein Web-Browser (218) oder die Layout-Engine (261) das Skript ignoriert, während ein weiterer Web-Browser (218) oder die Layout-Engine (261) nach dem Skript arbeitet.

14. TMD (110) nach Anspruch 7, wobei die Aktionen ferner umfassen:
Wenn festgestellt wird, dass eine für die eine oder mehrere Antworten festgelegte Einstufung unter eine gewünschte Vertrauensschwelle fällt, dann Bereitstellen zumindest eines zusätzlichen Tests an das Client-Gerät (102, 103, 104) unter Verwendung fehlerhafter HTML

15. TMD (110) nach Anspruch 7, wobei eine Zuordnung (Mapping) der festgestellten Klassifizierung zum Client-Gerät (102, 103, 104) zur nachfolgenden Verwendung für das Client-Gerät (102, 103, 104) gespeichert wird.

## Revendications

1. Un dispositif de réseau (110), comprenant :
une mémoire (316, 332, 328) configurée de façon à être capable de conserver en mémoire des instructions,
une interface de réseau (310) configurée de façon à être capable de recevoir et transmettre un contenu par l'intermédiaire d'un réseau (108, 109), et
un ou plusieurs processeurs (312) qui sont configurés de façon à être capables d'exécuter les instructions conservées en mémoire dans la mémoire (316, 332, 328) de façon à exécuter des actions, comprenant :
la réception, à partir d'un dispositif client (102, 103, 104), d'une demande relative à un contenu web,
la fourniture au dispositif client (102, 103, 104) d'au moins un test au moyen d'un contenu en langage de balisage hypertexte (HTML) malformé, où le contenu HTML malformé est un contenu HTML qui s'écarte d'une spécification HTML,
la réception d'une ou de plusieurs réponses au au moins un test fourni à partir du dispositif client (102, 103, 104),
l'utilisation des une ou plusieurs réponses de façon à déterminer un classement d'un élément parmi un navigateur web (218) ou un moteur de mise en page (261) utilisé par le dispositif client (102, 103, 104), où le classement déterminé est basé sur la manière dont un composant d'analyseur de document dans le navigateur web (218) ou le moteur de mise en page (261) a répondu au au moins un test, et
l'utilisation du classement déterminé de façon à fournir le contenu web demandé dans un format utilisable par le navigateur web (218) ou le moteur de mise en page (261) classé.

2. Le dispositif de réseau (110) selon la Revendication 1, où les actions comprennent en outre :
la réception à partir du dispositif client (102, 103, 104) de données d'agent utilisateur indiquant un classement du navigateur web (218), et
l'utilisation des données d'agent utilisateur de façon à affiner le classement déterminé.

3. Le dispositif de réseau (110) selon la Revendication 2, où les actions comprennent en outre :
la comparaison du classement de données d'agent utilisateur au classement déterminé de façon à détecter une mystification d'agent utilisateur possible.

4. Le dispositif de réseau (110) selon la Revendication 1, où le au moins un test est utilisable de façon à distinguer le type de navigateur web (218) d'autres navigateurs web (218) qui utilisent un même moteur de mise en page (261).

5. Le dispositif de réseau (110) selon la Revendication 1, où le au moins un test est imbriqué dans une page web desservie au dispositif client (102, 103, 104).

6. Le dispositif de réseau (110) selon la Revendication 1, où le au moins un test comprend un contenu web malformé avec un script qui est configuré de sorte qu'au moins un navigateur web (218) ignore le script, tandis qu'un autre navigateur web (218) fonctionne sur le script.

7. Le dispositif de réseau (110) selon la Revendication 1, où le dispositif de réseau (110) est un dispositif de gestion de trafic (TMD), interposé entre un dispositif client (102, 103, 104) et au moins un dispositif serveur, où :
ladite mémoire (316, 332, 328) est fournie par un ou plusieurs dispositifs à mémoire, et
dans lesdites actions que lesdits un ou plusieurs processeurs sont configurés de façon à être capable d'exécuter, la demande relative à un contenu web provenant du dispositif client (102, 103, 104) est une demande relative à un contenu en langage de balisage hypertexte (HTML).

8. Le TMD (110) selon la Revendication 7, où le contenu web demandé est obtenu à partir du au moins un dispositif serveur.

9. Le TMD (110) selon la Revendication 7, où les actions comprennent en outre :
la réception de données d'agent utilisateur à partir du dispositif client (102, 103, 104), les données d'agent utilisateur indiquant un classement du navigateur web (218),
la comparaison du classement de données d'agent utilisateur au classement déterminé de façon à détecter une mystification d'agent utilisateur possible, et
lorsque une mystification d'agent utilisateur est détectée, le blocage du transfert du contenu demandé vers le dispositif client (102, 103, 104).

10. Le TMD (110) selon la Revendication 7, où les actions comprennent en outre :
la réception à partir du dispositif client (102, 103, 104) de données d'agent utilisateur indiquant un classement du navigateur web (218), et
l'utilisation des données d'agent utilisateur de façon à affiner le classement déterminé.

11. Le TMD (110) selon la Revendication 7, où le au moins un test est imbriqué à l'intérieur d'une page web à partir de laquelle le dispositif client (102, 103, 104) demande le contenu HTML

12. Le TMD (110) selon la Revendication 7, où la détermination d'un classement comprend en outre la détermination d'au moins une version parmi une version du navigateur web (218) ou du moteur de mise en page (261).

13. Le TMD (110) selon la Revendication 7, où le au moins un test comprend un contenu HTML malformé possédant un script, le contenu HTML malformé étant agencé de sorte qu'au moins un navigateur web (218) ou moteur de mise en page (261) ignore le script, tandis qu'un autre navigateur web (218) ou moteur de mise en page (261) fonctionne sur le script.

14. Le TMD (110) selon la Revendication 7, où les actions comprennent en outre :
lorsqu'il est déterminé qu'une notation déterminée pour les une ou plusieurs réponses passe sous un seuil de confiance souhaité, alors la fourniture d'au moins un test additionnel au dispositif client (102, 103, 104) au moyen d'un HTML malformé.

15. Le TMD (110) selon la Revendication 7, où une mise en correspondance du classement déterminé avec le dispositif client (102, 103, 104) est conservée en mémoire pour une utilisation subséquente par le dispositif client (102, 103, 104).
